# EUROPÄISCHE PATENTANMELDUNG

(11) **EP 1 464 984 A1**
(43) Veröffentlichungstag der Anmeldung: **06.10.2004**
(21) Anmeldenummer: 04001887.1
(22) Anmeldetag: 29.01.2004
(51) Int. Cl.: G01S 7/52

(54) **Verfahren und Computerprogramm zum Simulieren des Detektionsbereiches eines Sensors**

(30) Priorität: 31.03.2003 DE 10314129
(71) Anmelder: Valeo Schalter und Sensoren GmbH, 74321 Bietigheim-Bissingen (DE)
(72) Erfinder: Gotzig, Heinrich, Dr., 74081 Heilbronn (DE); Jung, Thomas, 74199 Untergruppenbach (DE)
(74) Vertreter: Dreiss, Fuhlendorf, Steimle & Becker

(57) **Zusammenfassung**

Die Erfindung betrifft ein Verfahren zum Ermitteln des Detektionsbereiches eines Sensors, insbesondere eines in ein Fahrzeug eingebauten Ultraschallsensors. Die Ermittlung eines derartigen Detektionsbereiches erfolgt im Stand der Technik in der Weise, dass der Sensor in das Bauteil, zum Beispiel eine Stoßstange, in welches er später in der Serienfertigung eingebaut werden soll, konkret eingebaut wird. Der Sensor wird dann abgeglichen und der Detektionsbereich gemessen. Um den Detektionsbereich des Sensors unabhängig von dem Vorhandensein des konkreten Bauteils, in welches der Sensor eingebaut werden soll, zu ermöglichen, und um die Ermittlung des Detektionsbereiches in einem frühen Stadium des Entwicklungsprozesses des Fahrzeugs zu ermöglichen, wird erfindungsgemäß vorgeschlagen, diesen zu simulieren.

## Beschreibung

Die Erfindung betrifft ein Verfahren und ein Computerprogramm zum Ermitteln des Detektionsbereiches eines Sensors, insbesondere eines in einem Fahrzeug eingebauten Ultraschallsensors.

Derartige Sensoren sind im Stand der Technik insbesondere für Parkhilfesysteme bei Fahrzeugen grundsatzlich bekannt. Da der Detektionsbereich grundsatzlich nicht nur von der Senderichtcharakteristik einer Strahlungsquelle des Sensors, sondern auch von der konkreten Einbausituation, das heißt der Einbauhöhe und der dem Einbauwinkel des Sensors im Fahrzeug abhängt, ist es bisher grundsätzlich erforderlich, die zu untersuchenden Sensoren konkret in ein Fahrzeug einzubauen, die Sensoren dann für die daraus resultierende konkrete Einbausituation abzugleichen und den Detektionsbereich dann zu messen. Der Abgleich wird in der realen Messung wie folgt durchgeführt: Die Schwellwerte der Sensoren werden auf minimale Werte eingestellt. Anschließend wird ein mit Schotter beladenes Brett vor dem Stoßfänger bewegt. Jetzt wird die Schwelle (Treppenfunktion) schrittweise solange erhöht, bis alle von Schotter empfangenen Echos unterhalb der Schwelle liegen. Der Detektionsbereich des Sensors wird dann durch die Verteilung der Positionen derjenigen Normkorper im Raum repräsentiert, bei denen die Amplitudenwerte der Echos die vorgegebenen Schwellenwerte uberschreiten.

Bei der bisherigen Vorgehensweise ist es nachteilig, dass die Bestimmung des Detektionsbereiches nur dann möglich ist, wenn ein Stoßfänger, in den der Sensor spater eingebaut werden soll, konkret vorliegt und der Sensor in diesen eingebaut ist. Dies ist deswegen erforderlich, weil nur dann bestimmte Einbauparameter, wie zum Beispiel ein Einbauwinkel und einbauspezifische Besonderheiten wie zum Beispiel ein gegenüber der Oberflache des Stoßfangers vorstehender oder rückspringend eingebauter Sensor bei der Ermittlung des Detektionsbereiches berucksichtigt werden können. Infolge der Tatsache, dass zur Bestimmung des Detektionsbereiches ein Stoßfänger konkret vorliegen muss, kann die Bestimmung des Detektionsbereiches erst zu einem sehr späten Zeitpunkt im Entwicklungsprozess eines Fahrzeugs erfolgen.
Ausgehend von diesem Stand der Technik ist es die Aufgabe der Erfindung, ein Verfahren und ein Computerprogramm bereitzustellen, welche die Ermittlung des Detektionsbereiches auch ohne das Vorliegen von Teilen, in welche der Sensor spater eingebaut werden soll, ermöglichen.

Diese Aufgabe wird durch das in Patentanspruch 1 beanspruchte Verfahren gelöst. Demnach wird der Detektionsbereich eines Sensors, insbesondere eines Ultraschallsensors eingebaut in ein Fahrzeug durch Ausführen der folgenden Schritte simuliert:
- Simulieren von Amplitudenwerten und Empfangszeitpunkten von Echos, die ein Empfänger des Sensors an einer fest vorgegebenen Einbauposition als Reflektionen von Strahlung an einem Normkorper empfangen wurde, wenn sich der Normkörper an verschiedenen Positionen im Strahlungsbereich einer Strahlungsquelle des Sensors mit bekannter Richtcharakteristik befinden und dort von dieser angestrahlt werden würde, wobei die Simulation unter Berücksichtigung der Ausbreitungsgeschwindigkeit der Strahlung sowie der Abstände und der Winkelbeziehungen zwischen den jeweiligen Positionen des Normkörpers, des Empfängers und der Strahlungsquelle relativ zueinander erfolgt, und
- Feststellen, für welche der Positionen die jeweiligen Amplitudenwerte der Echos des Normkörpers oberhalb von definierten Schwellenwerten liegen, wobei die Verteilung dieser Positionen im Raum den Detektionsbereich des Sensors repräsentieren.

Simulieren im Sinne der Erfindung meint insbesondere Berechnen aufgrund von Modellannahmen.

Die fest vorgegebene Einbauposition repräsentiert die spätere vorgesehene reale Einbausituation des Empfangers; sie ist insbesondere definiert durch Parameter wie Einbauhöhe oder Einbauwinkel, insbesondere in Bezug auf die Straßenoberfläche.

Vorteilhafterweise ermöglicht das beanspruchte Verfahren eine Ermittlung beziehungsweise eine Simulation des Detektionsbereichs eines bekannten Sensors bei einer zukünftig geplanten Einbausituation, ohne dass diese Einbausituation mit Hilfe von zukünftig zur Verwendung geplanten Vorrichtungen real nachgebildet werden muss. Dies spart nicht nur Kosten, sondern ermöglicht auch die Bereitstellung des Detektionsbereiches des Sensor bereits zu einem sehr frühen Zeitpunkt im Entwicklungsprozess eines Fahrzeugs.

Gemäß einem ersten Ausführungsbeispiel des erfindungsgemäßen Verfahrens ist es vorteilhaft, die Schwellwerte zur Bestimmung des Detektionsbereiches so festzulegen, dass gewünschte Echos von Normkörpern eindeutig unterschieden werden können von unerwünschten Echos von Begrenzungsflächen in der Umgebung des Empfängers des Sensors.

Vorteilhafterweise erfolgt die Festlegung der Schwellenwerte deshalb auf einem Niveau, welches oberhalb von den Amplitudenniveaus von Schotterboden liegt, der ein maximal störendes Reflexionsverhalten für die Bestimmung des Detektionsbereiches darstellt.

Weitere vorteilhafte Ausgestaltungen des Verfahrens sind Gegenstand der Unteransprüche.

Die oben genannte Aufgabe der Erfindung wird weiterhin durch ein Computerprogramm zur Simulation des Detektionsbereiches des Sensors gelöst. Die Vorteile dieses Computerprogramms entsprechen den oben mit Bezugnahme auf das erfindungsgemäße Verfahren genannten Vorteilen.

### Zeichnungen

Der Beschreibung sind insgesamt vier Figuren beigefugt, wobei
- Figur 1: einen Sensor gemäß der Erfindung;
- Figur 2: ein Flussdiagramm zur Darstellung des erfindungsgemäßen Verfahrens;
- Figur 3a: einen Schnitt durch den räumlichen Detektionsbereich des Sensors in X/Y-Richtung;
- Figur 3b: einen Schnitt durch den räumlichen Detektionsbereich des Sensors in Z/X-Richtung; und
- Figur 4: den Verlauf von Amplitudenwerten von Begrenzungsflachenechos und eine einhüllende Treppenfunktion
zeigt.

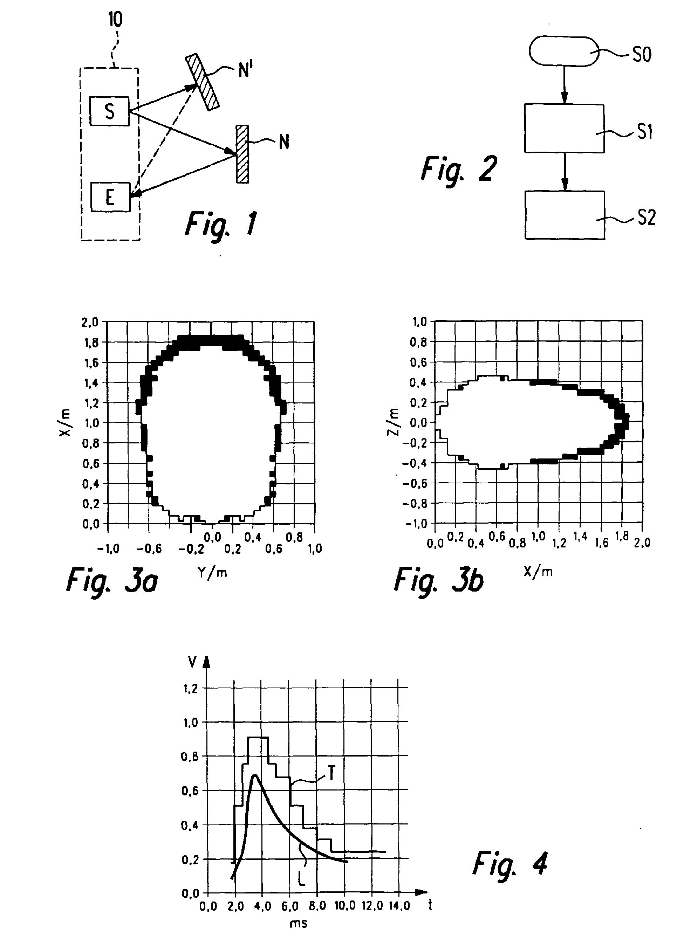

Die Erfindung wird nachfolgend anhand eines Ausführungsbeispiels unter Bezugnahme auf die Figuren 1 - 4 näher beschrieben.

Figur 1 zeigt zunächst eine dem erfindungsgemäßen Simulationsverfahren zugrunde liegende fiktive Anordnung eines Sensors 10 und eine Normkörpers N. Das erfindungsgemäße Verfahren simuliert, dass eine Strahlungsquelle S des Sensors 10 Strahlung zumindest teilweise auf einen Normkörper N aussendet und dass dieser Normkorper diese Strahlung zumindest teilweise auf einen Empfänger E des Sensors zurückreflektiert. Es sei an dieser Stelle jedoch nochmals betont, dass die in Figur 1 gezeigte Anordnung für die Durchführung des erfindungsgemäßen Verfahrens ausdrücklich nicht real zu existieren braucht, sondern dass sie lediglich von dem erfindungsgemäßen Verfahren simuliert wird.

Figur 2 veranschaulicht in abstrakter Form das erfindungsgemäße Verfahren. Nach der Durchführung eines Startschrittes S0 sieht das Verfahren für die Simulation des Detektionsbereiches des Sensors 10 zunächst die Durchführung eines Verfahrensschrittes S1 vor. Gemaß diesem Schritt werden Amplitudenwerte und Empfangszeitpunkte von Echos simuliert, die der Empfänger E des Sensors 10 als Reflektionen von Strahlung an dem Normkörper M empfangen würde, wenn sich der Normkörper an verschiedenen Positionen im Strahlungsbereich der Strahlungsquelle S des Sensors 10 befinden würde. Bei dieser Simulation wird die zukünftig geplante Einbausituation des Empfängers E real nachgebildet. Dies wird dadurch erreicht, dass die zukünftig geplante Einbauhöhe des Empfängers E über Grund und dessen Einbauwinkel zum Beispiel in einem Stoßfänger des Fahrzeugs bei der Simulation berucksichtigt werden. Die Berücksichtigung all dieser genannten Einbaukriterien ist wichtig, weil sie alle einen Einfluss auf den zu bestimmenden Detektionsbereich des Sensors haben können. Bei der Simulation wird weiterhin die Senderichtcharakteristik der Strahlungsquelle und die Ausbreitungsgeschwindigkeit der Strahlung sowie die Abstände und die Winkelbeziehungen zwischen den jeweiligen Positionen des Normkörpers des Empfangers E und der Strahlungsquelle S relativ zueinander berucksichtigt.

In einem nachfolgenden Verfahrensschritt S2 wird dann festgestellt, für welche der Positionen des Normkorpers im Raum die jeweiligen Amplitudenwerte der Echos des Normkörpers oberhalb von definierten Schwellenwerten liegen. Die Verteilung dieser Positionen im Raum repräsentiert dann den Detektionsbereich des Sensors.

Der Detektionsbereich des Sensors stellt demnach im Wesentlichen ein voluminöses Gebilde im dreidimensionalen Raum dar.

In Figur 3a ist ein Schnitt durch einen beispielhaften Detektionsbereich in einer X/Y-Ebene grafisch dargestellt. Demgegenüber zeigt die Figur 3b einen Querschnitt durch den Detektionsbereich in der X/Z-Ebene, die rechtwinklig zu der in Figur 3a gezeigten X/Y-Ebene angeordnet ist. Auf die schwarz markierten Randbereiche des Detektionsbereiches wird weiter unten eingegangen.

Für eine moglichst realitatsnahe Simulation des Detektionsbereiches kommt der Definition der Schwellenwerte eine besondere Bedeutung zu. Mit ihrer Wahl kann der Grad an Sicherheit definiert werden, mit welchem der Sensor den Normkörper von unerwünschtem Rauschen oder von anderen Störeinflüssen unterscheiden kann.

Erfindungsgemaß erfolgt die Festlegung der Schwellenwerte durch die folgende zweistufige Simulation. In einem ersten Schritt wird zunächst der zeitliche Verlauf der Amplitudenwerte von sogenannten Begrenzungsflächenechos ermittelt. Dabei handelt es sich um Echos, welche der Empfanger E ohne Berücksichtigung des Normkorpers von einer Begrenzungsfläche in seiner Umgebung, deren Reflektionsverhalten als bekannt vorausgesetzt wird, empfangen würde, wenn diese Begrenzungsfläche zumindest partiell von der Strahlungsfläche angestrahlt werden würde. Mit "partiell" ist gemeint, dass die Strahlungsquelle S relativ zu dem Empfänger E so angeordnet sein muss, dass ihre als bekannt vorausgesetzte Senderichtcharakteristik im Wesentlichen von dem Empfänger E weg orientiert ist und dass zumindest ein Teil der von ihr ausgesandten Strahlung durch Oberflächenstrukturen auf der Begrenzungsflache auf den Empfänger reflektiert wird. Die auf diese Weise simulierten Echos von Begrenzungsflächen in der Umgebung des Empfangers E repräsentieren Störeinflusse, welche den Empfang des Empfängers E beeinflussen konnen. Der Empfanger E beziehungsweise der Sensor 10 muss deshalb erfindungsgemaß so ausgebildet sein, dass er in die Lage versetzt wird, spater in der Realitat erwunschte Echos von realen Hindernissen in seiner Umgebung von solchen unerwünschten Begrenzungsflächenechos, das heißt von Störeinflüssen, zu unterscheiden.

Diese Ausbildung des Sensors 10 beziehungsweise des Empfängers E erfolgt in der Weise, dass für den Sensor und seine konkrete Einbausituation Schwellenwerte für verschiedene mogliche Empfangszeitpunkte von Echos festgelegt werden. Die Schwellenwerte werden dabei vorzugsweise in Form einer Treppenfunktion für die jeweiligen Zeitpunkte definiert, wobei die Treppenfunktion eine Einhüllende für den Verlauf der Amplitudenwerte der Begrenzungsflächenechos bildet. Die einhüllende Treppenfunktion und damit die entsprechenden Schwellenwerte liegen oberhalb der Amplitudenwerte der Begrenzungsflächenechos. Wie bereits oben erwähnt, wird der Normkörper beziehungsweise in der Realität später ein beliebiges Hindernis in der Umgebung des Sensors nur dann erkannt, wenn er für den Empfänger ein Echo realisiert, dessen Amplitudenwert größer als der für seinen Empfangszeitpunkt vorgesehenen Schwellenwert ist.

Mit der Festlegung der Schwellenwerte in Form der Treppenfunktion oberhalb des Verlaufs der Amplitudenwerte für die Begrenzungsflächenechos wird sichergestellt, dass kein Begrenzungsflächenecho oder ein anderes Echo mit vergleichbar schwacher Amplitude als Echo eines real existierenden Hindernisses erkannt wird. Anders ausgedrückt, je größer der Abstand der Schwellenwerte beziehungsweise der Treppenfunktion zu dem Verlauf der Amplitudenwerte der Begrenzungsflachenechos gewählt wird, desto sicherer ist später die Unterscheidung eines realen Hindernisses zu Bodenechos. In Figur 4 ist ein möglicher Verlauf von Amplitudenwerten von Begrenzungsflächenechos als durchgezogene schwarze Linie L dargestellt. Oberhalb dieser durchgezogenen Linie ist ein Beispiel für eine erfindungsgemäß definierte einhüllende Treppenfunktion T zu erkennen. Die einzelnen Treppenstufen bilden unterschiedliche Schwellenwerte je nach Empfangszeitpunkt der Echos. In Figur 4 sind die Schwellenwerte beispielhaft als Spannungsschwellen in Volt für unterschiedliche Empfangszeitpunkte der Echos angegeben. Bei der Betrachtung von Figur 4 ist zu berücksichtigen, dass ein Echo typischerweise lediglich eine Dauer von einigen hundert µs, insbesondere von 312 µs aufweist und damit wesentlich kürzer ist als die in Figur 4 auf der Abszisse gewahlte Zeiteinheit von 2 ms. Die auf der Abszisse aufgetragene Zeit kann als Laufzeit der Strahlung interpretiert werden, welche die Strahlung benötigt für die Zurucklegung des Weges von der Strahlungsquelle S hin zu einem Reflektionshindernis und von dort zuruck zum Empfanger E. Würde diese Laufzeit einer Strahlung, welche in der Terminologie der Erfindung dem Empfangszeitpunkt des Echos entsprechen würde, cirka 6,5 ms betragen, dann wurde das entsprechende Echo gemäß der in Figur 4 gezeigten Treppenfunktion mit einem Schwellenwert von cirka 0,5 V verglichen werden.

Ein mit der in Figur 4 gezeigten Treppenfunktion ausgerüsteter Sensor wurde dementsprechend ein Hindernis, welches das zuvor beschriebene Echo erzeugt hat, lediglich dann als sicher innerhalb seines Detektionsbereichs liegend erkennen, wenn die Amplitude des Echos größer als 0,5 V wäre.

Ebenfalls der Erkennungssicherheit dient der erfindungsgemäße Vorschlag, in der Simulation die Begrenzungsflächenechos so zu wählen, dass sie eine sehr starke Storung für den später geplanten Einsatz repräsentieren. Eine solch starke Störung, das heißt eine besonders starke Reflexion an Begrenzungsflächen ware bei einem späteren realen Einsatz dann gegeben, wenn der Empfänger in einem Fahrzeug betrieben würde, welches sich auf einer Schotterpiste bewegt. Schotter hat im Unterschied zu einer geteerten Straße eine sehr grobe Oberflachenstruktur, welche bewirkt, dass ein besonders hoher Anteil der von der Strahlungsquelle S ausgesandten Strahlung an den Empfänger reflektiert und dort eine besonders große Storung verursachen wurde.

Erfindungsgemäß wird deshalb vorgeschlagen, als Begrenzungsfläche eine solche Schotterpiste zu betrachten und die Schwellenwerte so festzulegen, dass selbst unter diesen Extrembedingungen noch eine klare Unterscheidung zwischen Echos von Hindernissen und Echos von Störeinflüssen getroffen werden kann.

Je größer der Abstand der Treppenfunktion T zu dem Verlauf der Amplitudenwerte von Begrenzungsflachenechos L gewählt wird, desto sicherer kann die genannte Unterscheidung getroffen werden. Andererseits darf dieser Abstand auch nicht zu groß gewählt werden, denn ansonsten wird der Detektionsbereich zu klein.

Durch die Festlegung von nicht nur einem, sondern von zwei oder mehreren Schwellenwerten ist es möglich, den Detektionsbereich in Bereiche mit unterschiedlicher Detektionssicherheit zu unterteilen. Ein solcher zweistufigen Detektionsbereich ist in den Figuren 3a und 3b gezeigt. Dort bildet das heller markierte Innere des Detektionsbereiches einen sicheren Erkennungsbereich, während die stärker schwarz markierten Randbereiche den unsicheren Detektionsbereich repräsentieren. Beliebig viele Abstufungen der Sicherheit des Detektionsbereiches sind durch das Vorsehen entsprechend vieler Schwellenwertstufen möglich.

Vorteilhafterweise ist die Strahlungsquelle als Ultraschallquelle und der Empfänger als Ultraschallempfänger ausgebildet. Sowohl der Empfanger wie auch die Strahlungsquelle können in einem Gerat, insbesondere als Ultraschallsensor realisiert sein. Das erfindungsgemäße Verfahren wird vorteilhafterweise als Computerprogramm realisiert. Dann ist es möglich, dass das Computerprogramm gegebenenfalls zusammen mit weiteren Computerprogrammen auf einem computerlesbaren Datenträger abgespeichert ist. Bei dem Datenträger kann es sich um eine Diskette, eine Compact Disc, einen sogenannten Flash Memory oder dergleichen handeln. Das auf dem Datenträger abgespeicherte Computerprogramm kann dann als Produkt an einen Kunden verkauft werden.

Ebenfalls ist es bei einer Realisierung des erfindungsgemäßen Verfahrens als Computerprogramm denkbar, dass dieses gegebenenfalls zusammen mit weiteren Computerprogrammen ohne die Zuhilfenahme eines Datentragers über ein elektronisches Kommunikationsnetzwerk, insbesondere das Internet an einen Kunden ubertragen und verkauft wird.

## Patentansprüche

1. Verfahren zum Simulieren des Detektionsbereiches eines Sensors, insbesondere eines Ultraschallsensors eingebaut in ein Fahrzeug, umfassend die Schritte:
- Simulieren von Amplitudenwerten und Empfangszeitpunkten von Echos, die ein Empfanger (E) des Sensors (10) an einer fest vorgegebenen Einbauposition als Reflexionen von Strahlung an einem Normkörper empfangen würde, wenn sich der Normkörper an verschiedenen Positionen im Strahlungsbereich einer Strahlungsquelle (S) des Sensors mit bekannter Senderichtcharakteristik befinden und dort von dieser angestrahlt werden würde, wobei die Simulation unter Berücksichtigung der Ausbreitungsgeschwindigkeit der Strahlung sowie der Abstände und der Winkelbeziehungen zwischen den jeweiligen Positionen des Normkörpers, des Empfangers und der Strahlungsquelle relativ zueinander erfolgt (Verfahrensschritt S1); und
- Feststellen für welche der Positionen die jeweiligen Amplitudenwerte der Echos des Normkörpers (N) oberhalb von definierten Schwellenwerten liegen, wobei die Verteilung dieser Positionen im Raum den Detektionsbereich des Sensors (10) repräsentieren (Verfahrensschritt S2).

2. Verfahren nach Anspruch 1, **dadurch gekennzeichnet, dass** die Schwellenwerte durch Ausführen der folgenden Schritte ermittelt werden:
- Simulieren des zeitlichen Verlaufs der Amplitudenwerte von Begrenzungsflachenechos, welche der Empfänger (E) ungeachtet des Normkörpers (N) von einer Begrenzungsflache in seiner Umgebung, deren Reflexionsverhalten als bekannt vorausgesetzt wird, empfangen wurde, wenn die Begrenzungsfläche zumindest partiell von der Strahlungsquelle (S) angestrahlt werden würde, wobei die Strahlungsquelle relativ zu dem Empfänger (E) so angeordnet ist, dass ihre als bekannt vorausgesetzte Senderichtcharakteristik im wesentlichen von dem Empfanger weg orientiert ist und zumindest ein Teil der von ihr ausgesandten Strahlung durch Oberflächenstrukturen auf der Begrenzungsflache auf den Empfänger (E) reflektiert wird; und
- Festlegen der Schwellenwerte für die jeweiligen Empfangszeitpunkte in Form einer einhüllenden Funktion (T) für den Verlauf der Amplitudenwerte der Begrenzungsflächenechos.

3. Verfahren nach Anspruch 2, **dadurch gekennzeichnet, dass** die einhüllende Funktion eine Treppenfunktion (T) oder eine Rampe einer e-Funktion ist.

4. Verfahren nach Anspruch 2 oder 3, **dadurch gekennzeichnet, dass** es sich bei der Begrenzungsfläche um Schotterboden handelt und die Simulation der Amplitudenwerte der Begrenzungsflächenechos unter Zugrundelegung des Reflexionsverhaltens von Schotter als Boden erfolgt.

5. Verfahren nach Anspruch 3 oder 4, **dadurch gekennzeichnet, dass** zumindest ein Teil der durch die Treppenfunktion (T) gebildeten Schwellenwerte jeweils einen vordefinierten Abstand zu dem Verlauf der Amplitudenwerte aufweisen.

6. Verfahren nach einem der Ansprüche 3 - 5, **dadurch gekennzeichnet, dass** zumindest einzelnen der durch die Treppenfunktion (T) definierten ersten Schwellenwerte ein zweiter Schwellenwert zugeordnet ist, welcher großer oder kleiner als der erste Schwellenwert sein kann, wobei dann ein sicherer Detektionsbereich des Empfängers (E) durch die Verteilung derjenigen Positionen im Raum definiert wird, bei denen die Amplitudenwerte der zugehörigen Echos größer als der größere der beiden Schwellenwerte ist und wobei ein unsicherer Detektionsbereich durch die Verteilung derjenigen Positionen definiert wird, bei denen die Amplitudenwerte der zuggehörigen Echos zwar größer als der kleinere, aber kleiner als der größere der beiden Schwellenwerte ist.

7. Verfahren nach einem der vorangegangenen Anspruche, **dadurch gekennzeichnet, dass** die Strahlungsquelle (S) als Ultraschallquelle, welche als Strahlung Ultraschall aussendet, und dass der Empfanger (E) als Ultraschallempfänger ausgebildet ist.

8. Verfahren nach einem der vorangegangenen Ansprüche, **dadurch gekennzeichnet, dass** der Empfanger (E) und die Strahlungsquelle (S) in einem Gerät, insbesondere als Ultraschallsensor, integriert sind.

9. Computerprogramm zur Simulation des Detektionsbereiches eines Sensors (S), **gekennzeichnet durch** Programmcode, welcher ausgebildet ist das Verfahren nach einem der Ansprüche 1 - 8 auszufuhren, wenn er auf einem Rechengerät, insbesondere einem Computer, ausgefuhrt wird.

10. Computerprogramm nach Anspruch 9, **dadurch gekennzeichnet, dass** das Computerprogramm auf einem Datenträger gespeichert ist.
